# EUROPEAN PATENT SPECIFICATION

(11) **EP 3 670 120 B1**
(45) Date of publication and mention of the grant of the patent: **30.08.2023**
(21) Application number: 18890275.3
(22) Date of filing: 11.12.2018
(51) Int. Cl.: B26D 5/00, B26D 7/01, B26D 7/06, B26D 7/30, A22C 17/00, A22C 25/18, B26D 5/32

(54) **DEVICE FOR AUTOMATICALLY CUTTING FROZEN FOOD PRODUCTS INTO PORTIONS OF AN EXACT WEIGHT**
VORRICHTUNG ZUM AUTOMATISCHEN SCHNEIDEN VON GEFRORENEN LEBENSMITTELPRODUKTEN IN PORTIONEN MIT EINEM EXAKTEN GEWICHT
DISPOSITIF DE COUPE AUTOMATIQUE DE PRODUITS ALIMENTAIRES CONGELÉS EN PORTIONS DE POIDS EXACT

(30) Priority: 18.12.2017 ES 201731417
(43) Date of publication of application: 24.06.2020
(73) Proprietor: Astech Food Machinery, S.L., (GIRONA) (ES)
(72) Inventor: MASOLIVER FEIXAS, Ricard, 17844 Cornella Del Terri (Girona) (ES)
(74) Representative: Gallego Jiménez, José Fernando
(86) International application number: PCT/ES2018/070796
(87) International publication number: WO 2019/122472

(56) References cited:
- EP-A1- 1 044 770
- EP-A1- 2 439 029
- ES-T3- 2 086 033
- ES-T3- 2 238 615
- ES-T3- 2 332 286
- KR-A- 20090 056 275
- US-A- 4 603 610
- US-B1- 6 882 434

## Description

### Object of the invention.

The object of the invention is a device for automatically cutting frozen food products, in particular products with an elongated or bar-shaped configuration, which has features aimed at performing the cutting of the product into portions of an exact weight.

### Field of application of the invention.

This invention is applicable to the sector dedicated to the manufacturing of cutting devices for frozen food products.

### State of the art.

Different cutting devices are currently known which have features suitable for cutting slices or portions of food products, the features of these devices being clearly different, depending on whether they are intended for cutting fresh or soft food products, or hard food products, for example, frozen and even bone-in products.

In the devices for cutting soft food products, it is common to use machines provided with a circular blade and with means for adjusting the gap between the blade and a front support and lateral movement surface of the piece of product to be cut, said gap determining the width of the slices or portions to be obtained.

Frozen food products have a much greater hardness, which is why the cutting thereof is usually carried out using a band saw, the operator being in charge of bringing the piece of product closer to the band and moving it laterally for the cutting thereof in portions.

This technique, in addition to being dangerous due to the risk of cutting the operator, has the drawback that the portions obtained will have a variable weight, depending in each case on the cross section of the piece in each of the cutting areas and the space between consecutive cuts.

As for frozen food marketing companies, there is an interest in the fact that the frozen product portions obtained have a predetermined exact weight, or with small variations, thus avoiding frozen product portions from being obtained with irregular, disproportionate weight and which are difficult to sell.

A device related with the cutting of frozen meat is known from KR20090056275 A, which describes a meat cutter and cut meat picking device which enables to secure stability during the cutting by applying differential pressure on a meat piece. The meat cutter incorporates meat clamping means, a pressure sensor, a transport unit and a cutting blade. However, the problem of obtaining a constant weight of cut meat is still not addressed.

Therefore, the technical problem that arises is the development of a device capable of automatically cutting of frozen food products with an elongated or bar-shaped configuration, in portions of a predetermined exact weight, automatically calculated by the device based on the cross section of the piece to be cut and the progress to be made by the piece between consecutive cuts, taking into consideration that the frozen product, such as fish or meat, has an essentially constant density, which makes it possible to obtain pieces of an exact weight based on the volume thereof, the device performing an initial movement of the piece of frozen product in a longitudinal direction and subsequently, in a cutting area, a combination of alternating movements in transverse direction and a longitudinal movement of variable length depending on the cross section of the piece in the cutting area.

### Description of the invention

The device for automatically cutting frozen food products of the invention is configured as an alternative novelty within the field of application thereof, since, according to its implementation, the aforementioned objectives are achieved, with the characterising details that distinguish it from what is already known, conveniently included in the claims of the invention.

According to the invention, this device for automatically cutting frozen food products into portions of exact weight comprises: an entry feeder that longitudinally moves a piece of a frozen food product to be cut towards a cutting area; a detector arranged in a product passage area and that provides signals suitable for determining the total length of the product piece and the position of the end of the piece; a motorised movable head provided with claws for gripping and moving the piece of product in a longitudinal direction from the entry feeder towards a cutting area; a scanner that determines the cross section of the piece of product during the movement thereof towards the cutting area; a cutting area provided with a vertical band saw arranged in a fixed position, and a carriage for transverse and alternating movement of a piece of product in a cutting direction and in a direction of return to the initial position; and, a programmable automaton for programming and selecting the operating parameters of the cutting device.

The carriage for transverse movement is motorised and movably mounted on transverse guides.

Based on the information received from the detector and the volume scanner, the automaton controls the alternating movements of the carriage for transverse movement and the longitudinal advance movements of the movable head, adjusting them such that the band saw performs the cutting of the product in consecutive portions of an exact weight.

In this way, portions of frozen product are obtained with a predetermined exact weight and with a greater or lesser length, depending on whether they have a smaller or larger cross section.

The features of the invention shall be more readily understandable in light of the exemplary embodiment shown in the attached figures described below.

### Description of the figures.

As a complement to the description provided herein, and for the purpose of helping to make the features of the invention more readily understandable, the present specification is accompanied by a set of drawings which, by way of illustration and not limitation, represent the following:
- Figure 1 shows a schematic perspective view of an exemplary embodiment of the cutting device according to the invention.
- Figure 2 shows a schematic elevation view of the cutting device of the previous figure.
- Figures 3 to 11 show respective explanatory details of the operation of the device from the entrance of the piece of frozen product to the cutting thereof into portions.

### Preferred embodiment of the invention.

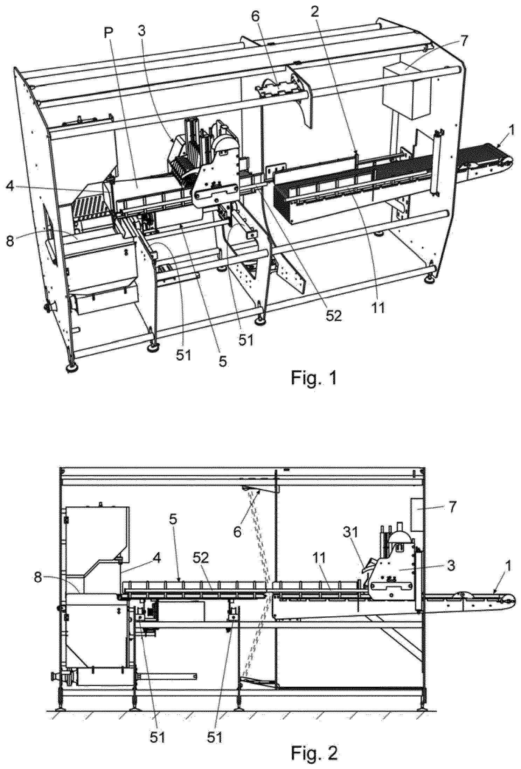

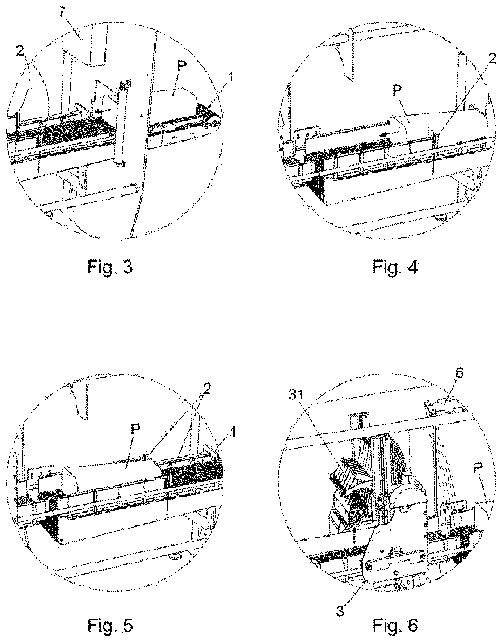

As seen in Figures 1 and 2, this device for automatically cutting frozen food products into portions of exact weight comprises an entry feeder (1) for longitudinally moving a piece (P) of a food product to be cut towards a cutting area and a detector (2) arranged in a product passage area, as shown in Figures 3 to 5, and which provides signals suitable for determining the total length of the piece (P) of product and the position of the end of the piece.

The movable head (3) has a configuration suitable for the passage of the piece (P) of product below the same and it is provided with rotating claws (31) for gripping and moving the piece (P) of product in a longitudinal direction from the entry feeder (1) to a cutting area provided with a vertical band saw (4), arranged in a fixed position for cutting the piece of product, and with a carriage (5) for transverse and alternating movement, motorised and mounted on transverse guides (51); said carriage (5) being in charge of moving transversely the piece of product in a cutting direction and in a direction of return to the initial position.

Arranged between the entry feeder (1) and the carriage (5) for transverse movement is a scanner (6) that determines the cross section of the piece (P) of product along the same, during the movement of the piece of product towards the cutting area.

The cutting device further comprises a programmable automaton (7) for programming its operation thereof and which, depending on the information received from the detector (2) and the volume scanner (5), controls the alternating movements of the carriage (5) for transverse movement and the longitudinal advance movements of the movable head (3) for cutting the product (P) in consecutive portions of an exact weight.

With the elements indicated, the operation of the cutting device is as follows:
As shown in Figures 3 to 5, the work cycle begins with the user loading the piece (P) of product in the entry feeder (1), which moves it longitudinally. The detector (2) detects the start of the product that continues to advance until it moves beyond the detector (2), causing the feeder (1) to stop. The information provided by said detector (2) makes it possible to know the total length of the product and the position of the end of the product.

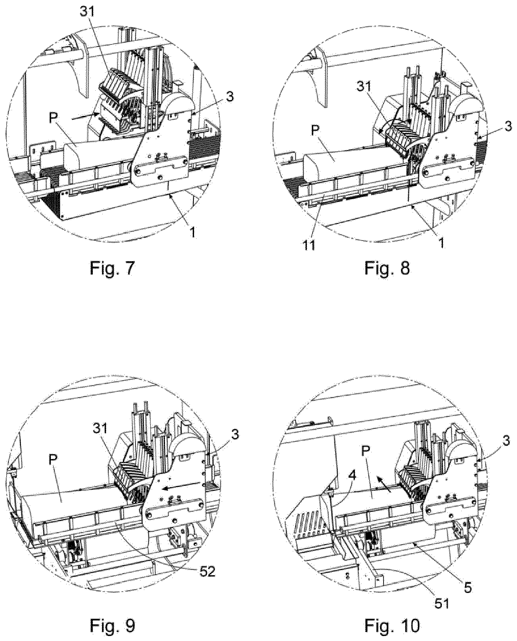

As shown in Figure 6, the claws (31) of the movable head (3) open vertically to enable the passage of the product under the head that moves on longitudinal guides (52) of the carriage (5) for transverse movement and on longitudinal guides (11) of the feeder until it is positioned behind the piece of product, to perform the grip thereof with the claws (31) at the rear end thereof, as shown in Figure 8.

As shown in Figure 9, the movable head (3) moves longitudinally towards the cutting area, positioning the piece (P) of product on the carriage (5) for transverse movement.

In Figure 10, the carriage (5) has moved along the guides (51) in the transverse direction and direction opposite to cutting, to prepare for the cut, and the movable head (3) has moved the piece (P) in longitudinal direction in a measure predetermined by the automaton and corresponding to the width of the portion of the product, of exact weight, to be obtained.

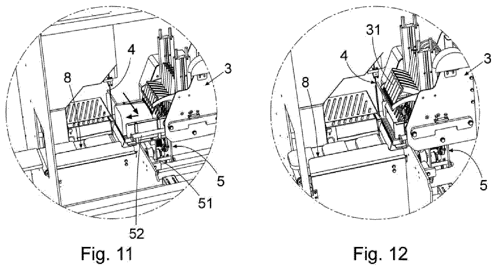

As the carriage (5) moves transversely in the cutting direction, the band saw (4) causes the cutting of a portion of the product, which falls on an extraction belt 8, as shown in Figure 11.

By orderly repeating the transverse movement of the carriage (5) in the direction opposite to that of cutting, the advance of the head (3) and the transverse movement of the carriage (5) in the cutting direction, the band saw (4) performs the cutting of the piece (P) in consecutive portions of exact weight, until the claws (31) of the movable head (3) are positioned in front of the product extraction belt (8) and open, expelling the last portion of product, as shown in Figure 12.

Having sufficiently described the nature of the invention, in addition to a preferred exemplary embodiment, it is hereby stated for the relevant purposes that the materials, shape, size and layout of the described elements may be modified, provided that it does not depart from the scope of the appended claims.

## Claims

1. A cutting device for automatically cutting frozen food products into portions of an exact weight; which comprises:
- a cutting area;
- an entry feeder (1) configured to move in a longitudinal direction a piece (P) of a food product to be cut towards the cutting area; and
- a motorised movable head (3) with a configuration suitable for the passage of the piece (P) of product below it and provided with claws (31) for gripping and moving the piece (P) of product in the longitudinal direction from the entry feeder (1) to the cutting area;
wherein the entry feeder (1) further comprises respective longitudinal guides (11) configured for allowing the motorised movable head (3) to move in the longitudinal direction;
**characterised in that**:
the cutting area is provided with:
- a vertical band saw (4) arranged in a fixed position; and
- a carriage (5) for transverse alternating movement of the piece (P) of product in a cutting direction and in a direction of return to the initial position, said carriage (5) being motorised and movably mounted on transverse guides (51), said carriage (5) comprising further respective longitudinal guides (52) configured for allowing the motorised movable head (3) to move in the longitudinal direction;
wherein the cutting device is further **characterised by** comprising:
- a detector (2) arranged in a product passage area , the detector (2) being configured to provide signals suitable for determining a total length of the piece (P) of product and a position of an end of the piece (P) of product; and
- a scanner (6) configured to determine a cross section of the piece (P) of product along the same, during the movement thereof towards the cutting area; and
- a programmable automaton (7) for programming the operation of the cutting device and which is configured for, depending on the information received from the detector (2) and the scanner (6), controlling the alternating movements of the carriage (5) and further controlling the longitudinal advance movements in the longitudinal direction of the motorised movable head (3), such that the vertical saw (4) cuts the piece (P) of food product in consecutive portions of an exact weight.

2. The cutting device, according to claim 1, **characterised in that** the cutting area comprises, after the band saw (4), a belt (8) for extracting the cut product.

## Patentansprüche

1. Schneidvorrichtung zum automatischen Schneiden von gefrorenen Lebensmittelprodukten in Abschnitte eines genauen Gewichts, die Folgendes umfasst: die umfasst:
- einen Schneidebereich;
einen Eintrittszuführer (1), der dazu ausgelegt ist, ein Stück (P) eines zu schneidenden Lebensmittelprodukts in Längsrichtung zum Schneidebereich zu bewegen; und
- einen motorisierten bewegbaren Kopf (3) mit einer Auslegung, die zum Durchführen eines Produktstücks (P) darunter geeignet ist, und der zum Greifen und Bewegen des Produktstücks (P) in die Längsrichtung vom Eintrittszuführer (1) zum Schneidebereich mit Klauen (31) versehen ist;
wobei der Eintrittszuführer (1) ferner jeweilige Längsführungen (11) umfasst, die dazu ausgelegt sind, es dem motorisierten bewegbaren Kopf (3) zu ermöglichen, sich in die Längsrichtung zu bewegen;
**dadurch gekennzeichnet, dass**:
der Schneidebereich mit Folgendem versehen ist:
- einer vertikalen Bandsäge (4), die in einer festen Position angeordnet ist; und
- einem Schlitten (5) zur alternierenden Querbewegung des Produktstücks (P) in eine Schneidrichtung und in eine Richtung der Rückkehr zur Ausgangsposition, wobei der Schlitten (5) motorisiert und bewegbar an Querführungen (51) montiert ist, wobei der Schlitten (5) weitere jeweilige Längsführungen (52) umfasst, die dazu ausgelegt sind, es dem motorisierten bewegbaren Kopf (3) zu ermöglichen, sich in die Längsrichtung zu bewegen;
wobei die Schneidvorrichtung ferner **dadurch gekennzeichnet ist, dass** sie Folgendes umfasst:
- einen Detektor (2), der in einem Produktdurchführungsbereich angeordnet ist, wobei der Detektor (2) dazu ausgelegt ist, Signale bereitzustellen, die zum Bestimmen einer Gesamtlänge des Produktstücks (P) und einer Position eines Endes des Produktstücks (P) geeignet sind; und
- einen Scanner (6), der dazu ausgelegt ist, einen Querschnitt des Produktstücks (P) entlang desselben während der Bewegung desselben zum Schneidebereich zu bestimmen; und
- einen programmierbaren Automaten (7) zum Programmieren des Betriebs der Schneidvorrichtung, der dazu ausgelegt ist, in Abhängigkeit von den vom Detektor (2) und vom Scanner (6) empfangenen Informationen die alternierenden Bewegungen des Schlittens (5) zu steuern sowie die Längsvorschubbewegungen in die Längsrichtung des motorisierten bewegbaren Kopfes (3) zu steuern, derart, dass die vertikale Säge (4) das Stück (P) des Lebensmittelprodukts in aufeinanderfolgende Abschnitte eines genauen Gewichts schneidet.

2. Schneidvorrichtung nach Anspruch 1, **dadurch gekennzeichnet, dass** der Schneidebereich hinter der Bandsäge (4) zum Entnehmen des geschnittenen Produkts einen Gurt (8) umfasst.

## Revendications

1. Dispositif de coupe destiné à la coupe automatique de produits alimentaires congelés en portions d'un poids exact ; qui comprend :
- une zone de coupe ;
- un alimentateur d'entrée (1) configuré pour déplacer dans une direction longitudinale un morceau (P) d'un produit alimentaire à couper vers la zone de coupe ; et
- une tête mobile motorisée (3) avec une configuration appropriée pour le passage du morceau (P) de produit en dessous de celle-ci et munie de griffes (31) pour saisir et déplacer le morceau (P) de produit dans la direction longitudinale depuis l'alimentateur d'entrée (1) vers la zone de coupe ;
dans lequel l'alimentateur d'entrée (1) comprend en outre des guides longitudinaux respectifs (11) configurés pour permettre à la tête mobile motorisée (3) de se déplacer dans la direction longitudinale ;
**caractérisé en ce que** :
la zone de coupe est pourvue de :
- une scie à ruban verticale (4) disposée dans une position fixe ; et
- un chariot (5) pour le déplacement transversal alternatif du morceau (P) de produit dans une direction de coupe et dans une direction de retour en position initiale, ledit chariot (5) étant motorisé et monté mobile sur des guides transversaux (51), ledit chariot (5) comprenant en outre des guides longitudinaux (52) respectifs configurés pour permettre à la tête mobile motorisée (3) de se déplacer dans la direction longitudinale ;
dans lequel le dispositif de coupe est en outre **caractérisé en ce qu'**il comprend :
- un détecteur (2) agencé dans une zone de passage de produit, le détecteur (2) étant configuré pour fournir des signaux appropriés pour la détermination d'une longueur totale du morceau (P) de produit et une position d'une extrémité du morceau (P) de produit ; et
- un dispositif de balayage (6) configuré pour la détermination d'une section transversale du morceau (P) de produit le long de celui-ci, lors de son déplacement vers la zone de coupe ; et
- un automate programmable (7) pour la programmation du fonctionnement du dispositif de coupe et qui est configuré pour, en fonction des informations reçues du détecteur (2) et du dispositif de balayage (6), la commande des mouvements alternatifs du chariot (5) et la commande en outre des mouvements longitudinaux d'avance dans la direction longitudinale de la tête mobile motorisée (3), de telle sorte que la scie verticale (4) coupe le morceau (P) de produit alimentaire en portions consécutives d'un poids exact.

2. Dispositif de coupe, selon la revendication 1, **caractérisé en ce que** la zone de coupe comprend, après la scie à ruban (4), un tapis (8) pour l'extraction du produit coupé.
